# EUROPÄISCHE PATENTSCHRIFT

(11) **EP 3 211 747 B1**
(45) Veröffentlichungstag und Bekanntmachung des Hinweises auf die Patenterteilung: **23.05.2018**
(21) Anmeldenummer: 17154909.0
(22) Anmeldetag: 04.10.2010
(51) Int. Cl.: H02J 5/00, E05D 11/00

(54) **VORRICHTUNG ZUR ÜBERTRAGUNG VON ELEKTRISCHER LEISTUNG VON EINER WAND ZU EINEM SCHARNIERGELENKIG AN DIESER WAND BEFESTIGTEN FLÜGEL**
METHOD AND DEVICE FOR TRANSMITTING ELECTRIC POWER FROM A WALL TO A LEAF HINGEABLY FASTENED TO SAID WALL
PROCÉDÉ ET DISPOSITIF DE TRANSMISSION DE PUISSANCE ÉLECTRIQUE D'UNE PAROI À UN VANTAIL FIXÉ À CETTE PAROI DE FAÇON ARTICULÉE PAR CHARNIÈRES

(30) Priorität: 02.12.2009 DE 102009044728
(43) Veröffentlichungstag der Anmeldung: 30.08.2017
(62) Teilanmeldung aus: 10770524.6
(73) Patentinhaber: Dr. Hahn GmbH & Co. KG, D-41189 Mönchengladbach (DE)
(72) Erfinder: Steinfeld, Ingo, 40764 Langenfeld (DE); Herglotz, Tibor, 52372 Kreuzau (DE); Meyer, Eckhard, 41352 Korschenbroïch (DE)
(74) Vertreter: Kluin, Jörg-Eden

(56) Entgegenhaltungen:
- DE-A1- 3 915 812
- DE-U1- 20 305 769
- US-A1- 2003 210 106

## Beschreibung

Die Erfindung betrifft eine Vorrichtung zur Übertragung von elektrischer Leistung von einer Wand zu einem um eine Scharnierachse S scharniergelenkig an dieser Wand befestigten Flügel.
Bänder, die zur scharniergelenkigen Verbindung eines Flügels an einer Wand dienen, sind bereits seit langem, beispielsweise aus der DE 93 02 652 U1 bekannt. Sie haben sich in unterschiedlichen technischen Ausgestaltungen vielfach bewährt und finden auch bei Türen für Objekte wie Häuser, Geschäfte oder auch bei Fluchttüren Verwendung.
Derartige Türen weisen in zunehmendem Maße die Sicherheit oder den Komfort verbessernde Einrichtungen auf, die mittels elektrischer Energie betrieben werden.
Zur Energieversorgung sind diese Einrichtungen über flexible Kabel mit einer externen Energiequelle verbunden.
Diese Kabelverbindungen beeinträchtigen das optische Erscheinungsbild deutlich und können zwischen dem Flügel und der Wand eingeklemmt werden, was zu Beschädigungen oder sogar zu Zerstörungen der Kabel führen kann.

Aus der DE 203 05 769 U1 ist ein Band mit einem eingebauten Trafo für eine kontaktlose Energieübertragung bekannt. Dieses Band umfasst eine in einem Rahmenbandteil angeordnete Primärspule und eine in einem Flügelbandteil angeordnete Sekundärspule. Der magnetischen Ankopplung der Sekundärspule an die Primärspule, die in Richtung der Scharnierachse voneinander beabstandet sind, dient ein beide Spulen durchsetzender Bandbolzen.
Zwar ist grundsätzlich die kontaktlose Energieübertragung von einem feststehenden Rahmen in einen schwenkbar an dem Rahmen angeordneten Flügel zur Vermeidung der obengenannten Nachteile wünschenswert, Versuche haben jedoch gezeigt, dass mit dem aus der DE 203 05 769 U1 nur sehr geringe elektrische Leistungen von der Primär- auf die Sekundärseite übertragen werden können, da die Verlustleistung bei der Übertragung sehr hoch ist.
Der Erfindung liegt daher die Aufgabe zugrunde, ein Verfahren und eine Vorrichtung zur Übertragung von elektrischer Energie von einer Wand zu einem um eine Scharnierachse scharniergelenkig an dieser Wand befestigten Flügel zu schaffen, um eine kontaktlose Übertragung elektrischer Energie zumindest mit einer Leistung zu bewerkstelligen, wie sie zum Laden eines elektrischen Energiespeichers und/oder für einen elektrischen Verbraucher benötigt wird.
Diese Aufgabe wird durch die in Anspruch 1 wiedergegebene Vorrichtung gelöst.
Die erfindungsgemäße Vorrichtung zur Übertragung von elektrischer Leistung von einer feststehenden Wand in einen um eine Scharnierachse scharniergelenkig an der Wand angebrachten Flügel weist daher ein an der Wand befestigbares Wandteil, ein an dem Flügel befestigbares Flügelteil, eine an dem Wandteil vorgesehene Primärspule und eine an dem Flügelteil vorgesehene Sekundärspule auf, wobei die Primär- und Sekundärspule für Frequenzen von mindestens 20 kHz geeignet und derart angeordnet sind, dass die Primärspule und die Sekundärspule mit einander zugewandten Stirnseiten zumindest nahezu aneinandergrenzen.
Um die induktive Ankopplung der Sekundärspule an die Primärspule zu verbessern, umfasst die Primärspule vorzugsweise eine Primärspulenwicklung und einen Primärsspulenkörper mit ferromagnetischen oder ferrimagnetischen Eigenschaften, beispielsweise aus einem ferromagnetischen oder ferrimagnetischen Material, und die Sekundärspule eine Sekundärspulenwicklung und einen Sekundärspulenkörper mit ferromagnetischen oder ferrimagnetischen Eigenschaften, beispielsweise aus einem ferromagnetischen oder ferrimagnetischen Material.

Zur Verbesserung der Ankopplung und auch zur leichteren Wickelbarkeit der Spule ist es besonders bevorzugt, einen Primärspulenkörper und/oder einen Sekundärspulenkörper zu verwenden, der eine innere, zylindrische Mantelfläche aufweist, um welche die Primärspulenwicklung bzw. die Sekundärspulenwicklung gewickelt ist.

Darüber hinaus ist es abermals zur Verbesserung der induktiven Ankopplung der Sekundärspule an die Primärspule und auch um die Spulen widerstandsfähiger gegen äußere Einflüsse zu machen, von besonderem Vorteil, wenn der Primärspulenkörper und/oder der Sekundärspulenkörper eine äußere Mantelfläche umfassen, die konzentrisch zur inneren Mantelfläche angeordnet ist. Die Spulenwicklung befindet sich dann geschützt umgeben von der inneren und der äußeren Mantelfläche sowie der geschlossenen Stirnseite.

Aufgrund des Frequenzbereichs, den die Primärspannung vorzugsweise aufweist, bestehen die Primärspulenwicklung und die Sekundärspulenwicklung vorzugsweise aus Hochfrequenzlitze.

Die erfindungsgemäße Vorrichtung ist derart ausgestaltet, dass sie ausschließlich der Übertragung von elektrischer Energie von einer Wand zu einem um eine Scharnierachse scharniergelenkig an dieser Wand befestigten Flügel und nicht der Übertragung von mechanischen Kräften dient. Die eigentliche Befestigung des Flügels an der Wand erfolgt in einem solchen Falle ausschließlich mit Hilfe von zumindest zwei weiteren, herkömmlichen Bändern. Von der inneren Mantelfläche radial nach innen gesehen können der Primär- und der Sekundärspulenkörper dann massiv ausgebildet sein.

Besonders bevorzugt ist es ferner, wenn die Spule eine Länge aufweist, die kleiner als der Außendurchmesser ihres Spulengehäuses ist.

Sind - wie ebenfalls bevorzugt - die Primärspule und die Sekundärspule baugleich ausgebildet, so lassen sich die Kosten für die Herstellung und die Lagerhaltung der Spulen reduzieren.

Versuche haben gezeigt, dass eine Leistungsübertragung von zumindest 500 Milliwatt bei einer Primärspannung von 5 V und einer Primärfrequenz von etwa 120 kHz erzielbar ist, wenn die Induktivitäten von Primärspule und Sekundärspule vorzugsweise etwa 30 µH betragen.

Um zu verhindern, dass bei einem inneren Kurzschluss einer Spule Teile der Vorrichtung mit der Primärspulenspannung beaufschlagt werden, ist es besonders bevorzugt, die Primärspule und/oder die Sekundärspule, insbesondere deren einander zugewandten Stirnseiten stoffschlüssig mit einem elektrisch isolierenden Material zu umgeben.

Die Erfindung soll nun anhand der beigefügten Zeichnungen weiter verdeutlicht werden. Es zeigen:
- Fig. 1: eine Explosionsdarstellung einer Ausführungsform der erfindungsgemäßen Vorrichtung, die nur der Übertragung von elektrischer Leistung von einer Wand in einen Flügel dient;
- Fig. 2: ein oberes Wandteil und ein Flügelteil, teilweise aufgerissen, in perspektivischer Einzeldarstellung.

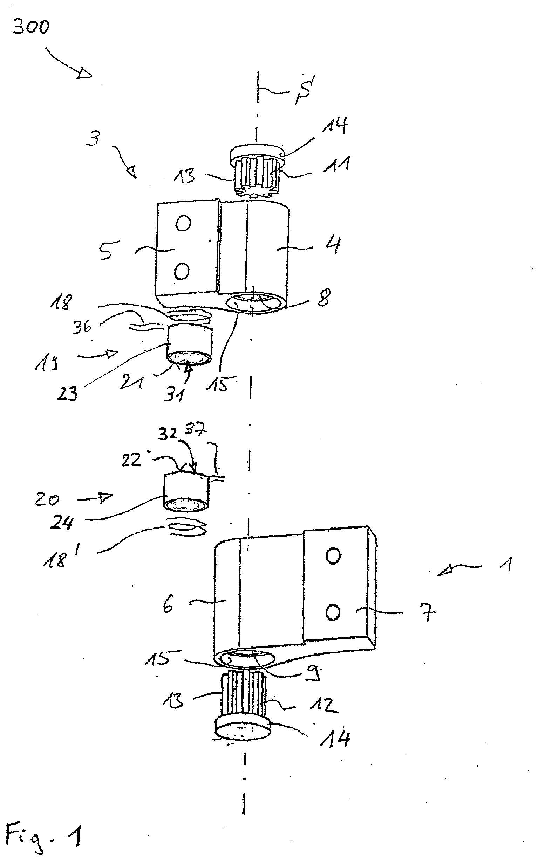

Die in Figur 1 als Ganzes mit 300 bezeichnete Vorrichtung umfasst ein oberes Wandteil 1 und ein Flügelteil 3.

Das obere Wandteil 1 umfasst ein Wandscharnierteil 4 und ein Wandbefestigungsteil 5. Dementsprechend umfasst das Flügelbandteil ein Flügelteil 6 und ein Flügelbefestigungsteil 7.

Es sind Lagerbuchsen 11 und 12 aus einem Kunststoffmaterial, beispielsweise auf Basis von POM mit gleitlagermodifizierenden Zusätzen, welches sich für den Einsatz als Lagerbuchse bei Bändern bewährt hat, in Aufnahmen 8, 9 der Wand- und Flügelscharnierteile 8, 9 angeordnet. Die Lagerbuchsen 11, 12 weisen sich parallel zur Scharnierachse S erstreckende, radiale Vorsprünge 13 auf. Der Durchmesser des die radialen Vorsprünge 13 miteinander verbindenden Kreises ist an den Innendurchmesser der Aufnahmen 8, 9 derart angepasst, dass die Lagerbuchsen 11, 12 spielfrei in die jeweilige Aufnahme eingreifen. An dem nach oben gerichteten Ende der Lagerbuchse des unteren Wandbandteils 2, an dem oberen Ende der Lagerbuchse 11 des oberen Wandbandteils 1 und an dem unteren Ende der Lagerbuchse 12 des Flügelteils 3 sind ringförmige Endbereiche 14 angeformt, die radial geringfügig über die radialen Vorsprünge 13 überstehen. Sie ruhen in einer entsprechend dimensionierten radialen Erweiterung 15 der jeweiligen Aufnahme 8, 9 und schließen somit die Aufnahmen nach außen gegen ein Eindringen von Verunreinigungen ab.

Die Lagerbuchsen 11, 12 sind lediglich etwa halb so lang ausgebildet sind wie die Aufnahme 8 des oberen Wandteils 1 bzw. die Aufnahme 9 des Flügelteils 3. In den verbleibenden Freiraum der Aufnahmen 8, 9 sind eine Primärspule 19 und eine Sekundärspule 20 eingesetzt. Zwischen der Primärspule 19 und der Lagerbuchse 11 sowie zwischen der Sekundärspule 20 und der Lagerbuchse 12 befindet sich jeweils eine Druckfeder 18, 18'. Diese Druckfedern sorgen dafür, dass die beiden Primär- und Sekundärspulen 19, 20 mit ihren Stirnseiten 21, 22 aneinander liegen.

Die Primärspule 19 und die Sekundärspule 20 sind identisch ausgebildet, jedoch bezüglich der Scharnierachse S in umgekehrter Richtung montiert. Sie umfassen einen Primärspulenkörper 23 und einen Sekundärspulenkörper 24, der ferromagnetisches oder ferrimagnetisches Material umfasst. Von Stirnwandungen erstrecken sich konzentrisch zur Scharnierachse S in entgegengesetzter Richtung jeweils eine innere Mantelwandung sowie jeweils eine äußere Mantelwandung. An der den Stirnwandungen gegenüberliegenden Seiten sind die Spulenkörper 23, 24 offen. Die Spulenkörper können aus Kunststoffmaterial gefertigt sein, in die Ferritpartikel eingelagert sind, beispielsweise Mangan-Zink-Ferrit enthaltend.

Im Inneren der Spulenkörper 24, 25 befinden sich die Primär- und Sekundärspulenwicklungen 31, 32, welche um die inneren Mantelwandungen gewickelt sind. Für die Spulenwicklungen findet Hochfrequenzlitze Verwendung.

Die Spulenkörper 23, 24 sind mit einem elektrisch nicht leitenden Kunststoffmaterial stoffschlüssig umspritzt.

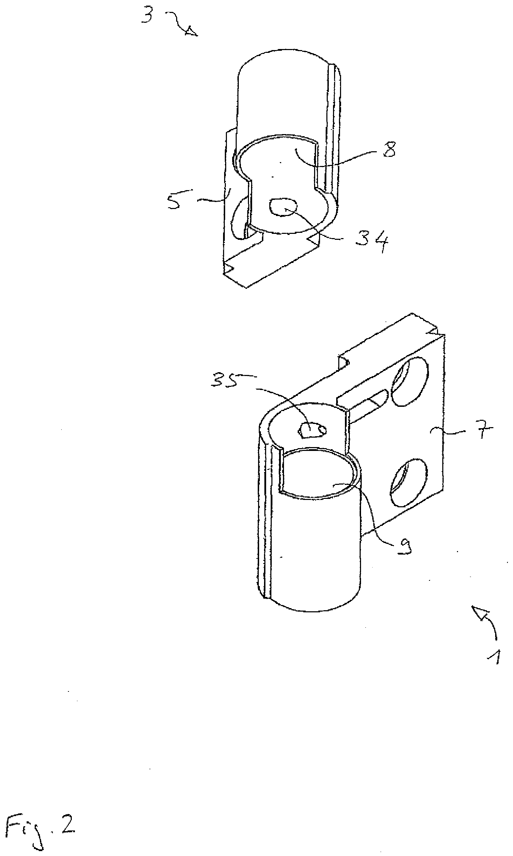

Wie insbesondere Fig. 2 entnehmbar ist, sind an dem oberen Wandteil 1 und an dem Flügelteil 3 Kanäle 34, 35 vorgesehen, welche sich von den Bandbolzenaufnahmen 8, 9 in das Rahmenbefestigungsteil 5 bzw. das Flügelbefestigungsteil 7 erstrecken. Sie dienen zum Durchführen von Anschlussleitungen 36, 37 der Primär- bzw. der Sekundärspule 19, 20.

Die erfindungsgemäße Vorrichtung wurde mit folgendem Versuchsaufbau getestet: Als Primär- und Sekundärspule 19, 20 finden Spulen mit einer Spulenwicklung von 50 Windungen einer Hochfrequenz-Litze mit 0,05 mm Durchmesser Verwendung. Die Spuleninduktivität betrug etwa 30 µH. Die mit einer Primärelektronik bereitgestellte Primärspannung betrug effektiv etwa 5 V mit einer Primärfrequenz von 120 kHz. Eine Sekundärelektronik war derart konzipiert, dass sie eine Gleichspannung von etwa 5 V am Ausgang bereitstellte. Es konnte eine Leistung von bis zu 750 mW sekundärseitig bereitgestellt werden.

Die Vorrichtung 300 dient ausschließlich der Übertragung elektrischer Leistung von einem Wandteil 1 in ein Flügelteil 3. Sie findet daher stets zusätzlich zu herkömmlichen Bändern bei einer Wand/Flügelanordnung Verwendung.

Bei dieser Vorrichtung 300 fehlt ein Bolzen. Dementsprechend sind die Lagerbuchsen 11, 12 nicht mit einer Bohrung versehen. Sie sind derart an die Aufnahmen 8, 9 angepasst, dass sie in diese unter Erzeugung eines Kraftschlusses einpressbar sind, so dass sich auf den zugewandten Stirnseiten die Druckfedern 18, 18' abstützen können.

Die Primär- und Sekundärspulen 19, 20 weisen demnach Spulenkörper auf, die keine zentrale Durchgangsbohrung zum Durchtritt eines Bolzens aufweisen, sondern dort als massiver Körper aus ferromagnetischem Material ausgebildet sind.

Wird die erfindungsgemäße Vorrichtung an einer Wand/Türanordnung angebracht, die herkömmliche Bänder umfasst, so erfolgt dies so, dass die Scharnierteile 4, 6 mit ihren einander zugewandten Stirnseiten nicht aneinander stoßen, sondern ein Spalt verbleibt, der von den unter Federkraft stirnseitig aufeinander gedrückten Primär- und Sekundärspulen überbrückt wird. Da diese in Ermangelung eines sie durchsetzenden Bolzens auch quer zur Scharnierachse S verlagerbar sind, kann eine Justierung des Flügels in dem Wandausschnitt in allen drei Raumrichtungen erfolgen, ohne dass es zu einer besondern Anpassung der Vorrichtung hierzu bedarf.

### Bezugszeichenliste:

- 300: Vorrichtung
- 1: oberes Wandteil
- 3: Flügelteil
- 4: Wandscharnierteil
- 5: Wandbefestigungsteil
- 6: Flügelscharnierteil
- 7: Flügelbefestigungsteil
- 8: Aufnahme
- 9: Aufnahme
- 11: Lagerbuchse
- 12: Lagerbuchse
- 13: Vorsprünge
- 14: Endbereiche
- 15: Erweiterung
- 18, 18': Druckfeder
- 19: Primärspule
- 20: Sekundärspule
- 21: Stirnseite
- 22: Stirnseite
- 23: Primärspulenkörper
- 24: Sekundärspulenkörper
- 31: Primärspulenwicklung
- 32: Sekundärspulenwicklung
- 34: Kanal
- 35: Kanal
- 36: Anschlussleitung
- 37: Anschlussleitung

## Patentansprüche

1. Vorrichtung (300) zur Übertragung von elektrischer Leistung von einer feststehenden Wand um eine Scharnierachse scharniergelenkig in einem an der Wand angebrachten Flügel,
mit einem an der Wand befestigbaren Wandteil (1),
mit einem an dem Flügel befestigbaren Flügelteil (3),
mit einer an dem Wandteil (1) vorgesehenen Primärspule (19), und mit einer an dem Flügelteil vorgesehene Sekundärspule (20), **dadurch gekennzeichnet,**
**dass** die Primärspule und die Sekundärspule für Frequenzen von mindestens 20 kHz geeignet und derart angeordnet sind, dass die Primärspule und die Sekundärspule mit einander zugewandten Stirnseiten (21, 22) zumindest nahezu aneinandergrenzen, dass
die Primärspule (19) eine Primärspulenwicklung (31) und einen Primärsspulenkörper (23) mit ferromagnetischen Eigenschaften, und die Sekundärspule eine Sekundärspulenwicklung (32) und einen Sekundärspulenkörper (24) mit ferromagnetischen Eigenschaften umfasst, und
**dass** die Vorrichtung (300) keinen die Spulenkörper (23, 24) durchsetzenden Bolzen und die Spulenkörper (23, 24) keine Durchgangsbohrungen zum Durchtritt eines Bolzens aufweisen, sondern die Spulenkörper (23, 24) als massiver Körper aus ferromagnetischem Material ausgebildet sind.

2. Vorrichtung nach Anspruch 1, **dadurch gekennzeichnet, dass** der Primärspulenkörper und/oder der Sekundärspulenkörper eine innere, zylindrische Mantelwandung aufweist, um welche die Primärspulenwicklung bzw. die Sekundärspulenwicklung gewickelt ist.

3. Vorrichtung nach Anspruch 1 oder 2, **dadurch gekennzeichnet, dass** der Primärspulenkörper und/oder der Sekundärspulenkörper eine äußere Mantelwandung umfasst, die konzentrisch zur inneren Mantelwandung angeordnet ist.

4. Vorrichtung nach einem der Ansprüche 1 bis 3, **dadurch gekennzeichnet, dass** die Primärspulenwicklung und die Sekundärspulenwicklung aus Hochfrequenzlitze bestehen.

5. Vorrichtung nach einem der Ansprüche 1 bis 4, **dadurch gekennzeichnet, dass** zumindest eine der Primär- und Sekundärspulen (19, 20) federkraftbeaufschlagt gegen die jeweils andere Spule in Richtung der Scharnierachse verlagerbar in dem Wand- bzw. dem Flügelteil gelagert ist.

6. Vorrichtung nach einem der Ansprüche 1 bis 5, **dadurch gekennzeichnet, dass** die Länge der Spule in Richtung der Scharnierachse kleiner als der Außendurchmesser des Spulengehäuses ist.

7. Vorrichtung nach einem der Ansprüche 1 bis 6, **dadurch gekennzeichnet, dass** die Primärspule und die Sekundärspule gleich ausgebildet sind.

8. Vorrichtung nach einem der Ansprüche 1 bis 7, **dadurch gekennzeichnet, dass** die Induktivität der Primärspule und/oder der Sekundärspule zwischen 1 µH und 100 µH beträgt.

9. Vorrichtung nach Anspruch 8, **dadurch gekennzeichnet, dass** die Induktivität der Primär- und/oder der Sekundärspule etwa 30 µH beträgt.

10. Vorrichtung nach einem der Ansprüche 1 bis 9, **dadurch gekennzeichnet, dass** die Primärspule und die Sekundärspule für eine effektive Spannung von max. 48 V geeignet sind.

11. Vorrichtung nach einem der Ansprüche 1 bis 10, **dadurch gekennzeichnet, dass** die Primärspule und/oder die Sekundärspule, insbesondere deren einander zugewandte Stirnseiten stoffschlüssig von einem elektrisch isolierenden Material umgeben sind.

## Claims

1. A device (300) for transmitting electric power from a stationary wall to a leaf hingeably fastened to the wall about a hinge axis, the system comprising
a wall part (1) that can be fastened to the wall,
a leaf part (3) that can be fastened to the leaf,
a primary coil (19) provided on the wall part (1), and a secondary coil (20) provided on the leaf part, **characterized in that:**
the primary coil and the secondary coil are suitable for frequencies of at least 20 kHz and are arranged such that the primary coil and the secondary coil are at least almost in contact with one another at end faces (21, 22) that face one another;
the primary coil (19) comprises a primary coil winding (31) and a primary coil body (23) having ferromagnetic properties, and the secondary coil comprises a secondary coil winding (32) and a secondary coil body (24) having ferromagnetic properties; and
the device (300) does not have bolts passing through the coil bodies (23, 24) and the coil bodies (23, 24) do not have through holes for the passage of a bolt, but rather the coil bodies (23, 24) are configured as solid bodies made of a ferromagnetic material.

2. The device according to claim 1, **characterized in that** the primary coil body and/or the secondary coil body have an inner cylindrical lateral surface about which the primary coil winding/secondary coil winding is wound.

3. The device according to claim 1 or 2, **characterized in that** the primary coil body and/or the secondary coil body comprise an outer lateral surface that is arranged concentrically to the inner lateral surface.

4. The device according to any of claims 1 to 3, **characterized in that** the primary coil winding and the secondary coil winding are composed of high-frequency cable.

5. The device according to any of claims 1 to 4, **characterized in that** at least one of the primary and secondary coils (19, 20) is displaceably mounted in the wall part and/or the leaf part by spring action against the other respective coil in the direction of the hinge axis.

6. The device according to any of claims 1 to 5, **characterized in that** the length of the coil in the direction of the hinge axis is smaller than the outer diameter of the coil housing.

7. The device according to any of claims 1 to 6, **characterized in that** the primary coil and the secondary coil are configured identically.

8. The device according to any of claims 1 to 7, **characterized in that** the inductance of the primary coil and/or the secondary coil is between 1 and 100 µH.

9. The device according to claim 8, **characterized in that** the inductance of the primary and/or secondary coil is about 30 µH.

10. The device according to any of claims 1 to 9, **characterized in that** the primary coil and the secondary coil are suitable for an effective voltage of at most 48 V.

11. The device according to any of claims 1 to 10, **characterized in that** the primary coil and/or the secondary coil, in particular, the end faces thereof that face one another, are surrounded by an electrically insulating material in a physically bonded arrangement.

## Revendications

1. Dispositif (300) de transmission d'une puissance électrique d'une paroi fixe à un vantail monté dans la paroi de manière articulée autour d'un axe d'articulation,
le dispositif comprenant
un élément côté paroi (1) pouvant être fixé à la paroi,
un élément côté vantail (3) pouvant être fixé au vantail,
une bobine primaire (19) prévue au niveau de l'élément de paroi (1) et
une bobine secondaire (20) prévue au niveau de l'élément de vantail,
**caractérisé en ce que**
la bobine primaire et la bobine secondaire sont adaptées à des fréquences d'au moins 20 kHz et sont disposées de telle sorte que la bobine primaire et la bobine secondaire sont au moins à peu près adjacentes l'une à l'autre avec des faces d'extrémité (21, 22) dirigées l'une vers l'autre,
la bobine primaire (19) comporte un enroulement de bobine primaire (31) et un corps de bobine primaire (23) ayant des propriétés ferromagnétiques, et la bobine secondaire comporte un enroulement de bobine secondaire (32) et un corps de bobine secondaire (24) ayant des propriétés ferromagnétiques, et
le dispositif (300) ne comporte pas de boulon passant à travers les corps de bobine (23, 24) et les corps de bobine (23, 24) ne comporte pas de trous traversants pour le passage d'un boulon, mais les corps de bobine (23, 24) sont conçus comme un corps solide en matériau ferromagnétique.

2. Dispositif selon la revendication 1, **caractérisé en ce que** le corps de bobine primaire et/ou le corps de bobine secondaire comporte une paroi d'enveloppe cylindrique intérieure autour de laquelle l'enroulement de bobine primaire ou l'enroulement de bobine secondaire est enroulé.

3. Dispositif selon la revendication 1 ou 2, **caractérisé en ce que** le corps de bobine primaire et/ou le corps de bobine secondaire comporte une paroi d'enveloppe extérieure qui est disposée concentriquement à la paroi d'enveloppe intérieure.

4. Dispositif selon l'une des revendications 1 à 3, **caractérisé en ce que** l'enroulement de bobine primaire et l'enroulement de bobine secondaire sont constitués d'un toron à haute fréquence.

5. Dispositif selon l'une des revendications 1 à 4, **caractérisé en ce qu'**au moins une des bobines primaire et secondaire (19, 20) est montée dans l'élément côté vantail ou dans l'élément côté paroi de manière à pouvoir se déplacer vers l'autre bobine en direction de l'axe d'articulation en étant soumise à une force élastique.

6. Dispositif selon l'une des revendications 1 à 5, **caractérisé en ce que** la longueur de la bobine dans la direction de l'axe d'articulation est inférieure au diamètre extérieur du boîtier de bobine.

7. Dispositif selon l'une des revendications 1 à 6, **caractérisé en ce que** la bobine primaire et la bobine secondaire sont identiques.

8. Dispositif selon l'une des revendications 1 à 7, **caractérisé en ce que** l'inductance de la bobine primaire et/ou de la bobine secondaire est comprise entre 1 µH et 100 µH.

9. Dispositif selon la revendication 8, **caractérisé en ce que** l'inductance de la bobine primaire et/ou secondaire est d'environ 30 µH.

10. Dispositif selon l'une des revendications 1 à 9, **caractérisé en ce que** la bobine primaire et la bobine secondaire sont appropriées à une tension efficace de 48 V maximum.

11. Dispositif selon l'une des revendications 1 à 10, **caractérisé en ce que** la bobine primaire et/ou la bobine secondaire, en particulier leur faces d'extrémité dirigées l'une vers l'autre, sont entourées d'un matériau électriquement isolant par liaison de matière.
